# EUROPEAN PATENT APPLICATION

(11) **EP 2 851 401 A1**
(43) Date of publication of application: **25.03.2015**
(21) Application number: 14722517.1
(22) Date of filing: 17.01.2014
(51) Int. Cl.: C09D 5/14, A01N 25/00

(54) **BIOCIDE COMPOSITION FOR CONTROLLING INVASIVE SPECIES AND PESTS, COATING PRODUCTS AND USE THEREOF**

(30) Priority: 23.07.2013 ES 201331114
(71) Applicant: Mateo Herrero, Maria Pilar, 46007 Valencia (ES)
(72) Inventor: The designation of the inventor has not yet been filed
(74) Representative: Ungria López, Javier
(86) International application number: PCT/ES2014/070026
(87) International publication number: WO 2015/011309

(57) **Abstract**

A biocidal composition for controlling invasive species in natural ecosystems and those altered by humans, which acts as an insecticide, acaricide, molluscicide, algicide, fungicide, arthropod repellent, chitin synthesis inhibitor and/or insect juvenile hormone regulator, comprising: at least one biocide, being an organic or inorganic synthetic biocide or a plant- or mineral-derived natural biocide, in a percentage of between 0.1 % and 75 %; and water in a percentage of between 10% and 70 %; coated by polymer- or mineral-based binders, which surround them in microcapsule form, wherein said polymer is comprised in the composition in a percentage of between 1 % and 50 % (percentages are by weight of the total weight of the composition); and fillers between 0.01 % and 40 % of the total weight of the composition. The invention likewise encompasses covering products that can be said biocidal compositions depending on their composition.

## Description

### TECHNICAL FIELD

The present invention falls within the Chemical sector, specifically within the area of manufacturing insecticides and repellents against invasive species and pests for environmental, agricultural, livestock and domestic use, therefore being applicable in the fields of Public Health, Agriculture, and Animal or Plant Health.

### STATE OF THE ART

Invasive species are those animals, plants or other organisms that are transported and introduced, almost always by human beings, into places outside of their natural area of distribution, and have managed to settle and spread in the new region, where they are harmful. This is the reason why these species are treated in a particular way. Thus, the "Boletín Oficial del Estado" (Spanish Official Bulletin) of 12 December 2011, SEC. I, page 132711 regulates the "Catálogo Español de Especies Exóticas Invasoras" (Spanish Catalogue of Invasive Alien Species) and the "Listado de Especies Exóticas con Potencial Invasor en España" (List of Exotic Species with Invasive Potential in Spain).

The harm caused by these species affects a variety of habitats, but degraded or altered ecosystems are especially sensitive, for example agricultural or urban settings, in addition to others such as marine and river ecosystems. In ecological terms, loss of native diversity and the degradation of the invaded habitats stand out. Economically, there are significant direct effects on farming activities and public health, including transmission of disease to humans and animals. Invasive species in urban and domestic settings are especially problematic, as they directly affect billions of people.

For quite some time there have been coating products for sale on the market that act as insecticides, as in the compositions disclosed in patent application EP0235584 (A1). However, there are several significant drawbacks when it comes to widespread use of these products: 1) they contain out-dated active substances, which are not state-of-the-art; 2) some of these active substances are now banned in the European Union (e.g. organochlorines) due to their toxicity; and some active substances are used, such as traditional pyrethroids, which do not have residual properties and have limited effectiveness over time. These problems have recently been addressed and corrected to a certain extent, with new formula designs such as those described in Spanish patent no. 2127120 for controlling arthropods. Said non-toxic and residual products inhibit the synthesis of chitin, one of the principal components of arthropod exoskeletons. The formula of this type of compositions basically comprises resin, pigment, fillers and active substances which are microencapsulated within the resin polymer itself during the manufacturing process. Likewise, Mexican patent application MX/a/2008/006733 describes compositions that are similar to the foregoing, but wherein alternative insecticides to organophosphorous and carbamates are used, since the use of the former has been restricted and regulated in recent years in a growing number of countries.

Indeed, at present, controls on the use of phytosanitary products in the European Union are very strict, by both the European Food Safety Agency and the relevant authorities in each State. It is necessary to control the use of phytosanitary products and reduce their application, and this is precisely what is taking place. The industry is still adapting to the latest restrictions on active substances. It is a matter of scale. The current proposal is radical, and gives farmers and industry little leeway to find new alternative, profitable products. Proposed regulations on marketing phytosanitary products are also under discussion. These regulations would further restrict the authorized active substances.

European Directive 91/414/CEE, which relates to marketing phytosanitary products, sets out uniform standards within the European Union for assessing, authorizing, marketing and controlling phytosanitary products and the active substances contained therein. It authorizes only those phytosanitary products the active substances of which are listed in Annex I of the Directive, which, if used under normal conditions, do not pose risks for human or animal health, or for the environment.

The current trend is towards a considerable reduction in authorized active substances, and in turn compositions. This situation is leading to severe pest problems in a number of crops, affecting mostly countries in the Mediterranean Basin, whose mild climate also makes agriculture more susceptible to the outbreak of pests. This phenomenon occurs with much less intensity in Central and Northern Europe.

The disappearance of formulae that till now had been effective at controlling pests, and the lack of alternatives that are at least equally effective, has made it necessary to seek out new alternatives from among the existing and authorized products.

Thus, the present invention has issued from within the current context as a new pest-control tool that is innovative not in terms of the active ingredients contained therein, but rather in terms of its special formula as a biocidal coating product. This is achieved by modifying the nature and/or proportion of the fillers, pigments and polymers included in the formula. The invention essentially relates to a new improved and expanded composition for controlling all types of organisms, particularly invasive species corresponding for the most part to different living creatures of the Animal Kingdom, Fungi and Protists (arthropods, mollusks, nematodes, birds, algae, fungi, and others). This control takes place thanks to a series of active substances that are microencapsulated with a binder in a polymer and mineral casing, as those previously described but with the special addition of using fillers and additives of a different nature than their predecessors, and which constitute an improvement to various aspects related to the release of the active biocidal substances, to the application technique, and to the final result of applying the product. Said active substances are biocides that may belong to the group of insecticides, acaricides, molluscicides, algicides, fungicides and others, and may be synthetic or naturally derived (from plants, animals or minerals). The mechanism of action for controlling invasive species may be either preventative or remedial, thanks to the fact that the active ingredients can have a biocidal and/or repellent effect.

### DESCRIPTION OF THE INVENTION

### Brief description of the invention

The present invention relates to a biocidal composition for controlling organisms that act as invasive species in natural ecosystems, and those altered by humans (agricultural, domestic...), applicable in the fields of public health, animal or plant health, agricultural, and the like. Said biocidal effect may be an insecticide, acaricide, molluscicide, algicide, fungicide, arthropod repellent, chitin- synthesis inhibitor and/or insect juvenile hormone regulator, depending on the components selected.

As such, the composition which is the object of protection comprises:
- between 0.1 % and 75 % by weight of the total weight of the composition, both limits included, of at least one active agent, which is a biocide selected from among the group comprised of: organic or inorganic synthetic biocide, plant-derived natural biocide, and mineral-derived natural biocide;
- between 10 % and 70% by weight of the total weight of the composition, both limits included, of water;
- between 1 % and 50 % by weight of the total weight of the composition, both limits included, of at least one polymer or mineral binder, which surround the active ingredients in microcapsule form; and
- between 0.01 % and 40 % by weight of the total weight of the composition, both limits included, of fillers.

The composition described herein provides a new methodology for controlling invasive species, whereby a single application achieves a high level of effectiveness over a diverse range of invasive organisms in the fields of agriculture, the environment, and veterinary science, of which the most noteworthy are: nematodes, mollusks, arthropods (insects, arachnids and crustaceans), algae and even birds. More specifically, the compositions are particularly effective against the following species:
- Nematodes: *Bursaphelenchus xylophilus* (pine wilt nematode).
- Mollusks: *Achatina fulica* (giant African land snail), *Corbicula fluminea* (Asian clam), *Dreissena polymorpha* (zebra mussel), *Pomacea spp.* (apple snail), *Potamopyrgus antipodarum* (New Zealand mud snail)
- Insects: *Aedes albopictus* (tiger mosquito), *Lasius neglectus* (invasive ants), *Paysandisia archon* (palm borer), *Rhynchophorus ferrugineus* (red palm weevil), *Vespa velutina* (Asian wasp), *Phlebotomus spp.* (transmitters of leishmania in humans and canines, and of Schmallenberg virus), *Culicoides* (transmitters of bluetongue disease and Schmallenberg virus) and *Culex spp.* (transmitters of West Nile virus).
- Crustaceans: *Procambarus clarkii* (Louisiana red crayfish).
- Birds: *Myiopsitta monachus* (monk parakeet), *Psittacula krameri* (rose-ringed parakeet), *Streptopelia roseogrisea* (African collared dove).
- Algae: *Caulerpa taxifolia, Caulerpa racemosa, Sargassum muticum.*
- Arachnids: mites, ticks, spiders and scorpions.

Among organisms that invade domestic, livestock or agricultural settings, the compositions act as an effective control agent preferably against: cockroaches *(Periplaneta americana);* bedbugs *(Cimex lectularius);* mosquitoes *(Culex quisquesfasciatus);* ants (Argentine *ant-Linepithema humile);* dust mites *(Dermatophagoides farinae);* and birds (Eurasian collared dove*-Streptopelia deaocto-,* pigeon*-Columba livia-,* black-headed gull*-Larus ridibundus*).

The formula acts mainly by means of contact, although it does act by means of inhalation as well. The basis of the biocidal composition described herein is the encapsulation of the active ingredients (biocides, including insecticides, growth regulators, etc.) in a polymer binder with a mineral coating, which widens the scope of the use thereof. The structure of the microcapsules that constitute the composition is an active center, and a shell, wall or structure that surrounds the former. The aim of the composition is to achieve a high level of effectiveness over a relatively long period of time, in order to avoid having to unnecessarily repeat the treatment and, in turn, releasing lesser amounts of pesticides into the environment in addition to reducing labor costs.

It is worth mentioning that the composition is highly persistent, since it releases the active ingredients gradually thanks to the presence of the microcapsules. In other words, the polymer-binder-based formula of the microcapsule, with a mineral coating, enables the microencapsulated active ingredients to be released progressively and gradually over time. This release is directly proportional to room temperature, i.e. the hotter it is, the more insects there are and the more active ingredients of the composition are released, whereas in the cold months far fewer insecticides are released at a time when the insect population among crops is lower.

Before these biocidal compositions are applied as a covering/coating, the particles of the active substances are dispersed in water. Once applied, the water evaporates and the particles move towards one another until joining together. As time passes, and under the effects of external agents, the particles closest to the surface are gradually released into the surroundings. Gradually, an increasingly stable film forms, in which the active substances are protected, and are released more and more slowly. A stable film is thus formed with regulated diffusion of the active agents. As said active agents are trapped within a polymer structure, and are slowly and gradually released, the amount of insecticides in the surrounding area is very low, considerably decreasing the already low toxicity of said ingredients. All of which gives the composition a set of properties that are hard to find in other conventional pesticides, such as immediate effectiveness, prolonged effectiveness, very low toxicity and easy application.

The process whereby the composition is obtained is complex, since the active substances are put into a mineral polymer structure or wall system, achieving the gradual release of the active agents, inserted based on the specific application requirements of the substrate wherein the microcapsules are to be deposited and, above all, of the invasive species to be controlled. The microcapsule is formed through a chemical process between the aqueous mineral polymer and the active agents, either all together or separately, in the polymer encapsulation structure. Said process can be carried out by means of interfacial polymerization. This method consists of polymerizing at least one monomer in the interphase of two immiscible substances, giving rise to a membrane that constitutes the wall of the microcapsule. In this process an aqueous solution of at least one water-soluble reactant is dispersed in an organic phase, giving rise to an emulsion. The formation of a polymer membrane on the surface of the drops of water of the emulsion gives rise to the microcapsules.

The composition is easy to apply, long-lasting, rain-resistant and effective. The mineral polymer casing contributes to making the active substance long-lasting and effective by protecting it and making the diffusion thereof easier.

### Detailed description of the invention

As has been said, the active biocidal agents are selected from among the group consisting of: organic or inorganic synthetic biocide, plant-derived natural biocide, and mineral-derived natural biocide. In other words, they may be very different in nature. Preferably, the organic or inorganic synthetic biocides for use in public, animal or plant health may be selected from the group comprised of:
- organophosphorous and/or carbamates, which act by inhibiting the action of the enzyme acetylcholinesterase, which handles nerve transmission;
- pyrethroids, which also affect the nervous system of insects, but by acting as axonal membrane dissociators, keeping the sodium channels of said membrane open;
- neonicotinoids, which act upon the central nervous system of insects, causing irreversible blockage of the postsynaptic nicotinic receptors of the acetylcholine;

- phenylpyrazoles, which block the chloride channels regulated by γ-aminobutyric acid (GABA) in insects' neurons;
- chitin synthesis inhibitors, which block proper formation of the cuticle in insects; and
- insect juvenile hormone analogs, which block proper development into adults, and affect fertility;
- synthetic molluscicidal biocides, preferably selected from among the group comprised of: niclosamide, phentylhydroxide and metaldehyde;
- synthetic nematicidal biocides, which are preferably selected from among the group comprised of: Fenamiphos, Oxamyl, Carbofuran, Terbuphos, Etoprophos and Cadusafos; and
- any combination thereof.

All of these groups are insecticides that act, by way of contact, ingestion and inhalation, on the various stages of development of insects and arachnids, although the egg stage is particularly resistant to its effects.

The biocides are preferably selected from among the group comprised of: dianizon, cholpyrifos, methylchlorpyrifos, malathion, trichlorfon, dimethoate, dichlorvos, methamidophos, acephate, parathion, fenitrothion, fenthion, azinphos methyl. The carbamates, on the other hand, are most preferably of the following types: methomyl, aldicarb, oxamyl, thiodicarb, methiocarb, propoxur, bendiocarb, carbosulfan, fenoxycarb, pirimicarb, indoxacarb, alanycarb and furathiocarb. The pyrethroids are preferably selected from among the group comprised of: allethrin, d-allethrin, alphacypermethrin, cypermethrin, permethrin, tetramethrin, bioallethrin, fenvalerate, bifenthrin, cyfluthrin, deltamethrin (which is one of the preferred insecticides in this invention, because of the effects it has, and because of the fast action thereof against invasive species), prallethrin, acenathrin, imiprothrin, lambda-cyhalothrin, gamma-cyhalothrin and etofenprox. The neonicotinoids are preferably selected from among the group comprised of: imidacloprid, acetamiprid, thiamethoxam, nitenpyram, clothianidin, dinotefuran and thiacloprid. The phenylpyrazoles are preferably selected between fipronil and endosulfan. The chitin-synthesis inhibitors are preferably selected from among the group comprised of: flufenoxuron, hexythiazox, diflubenzuron, hexaflumuron and triflumuron. These chitin-synthesis inhibitors fall within the so-called insect growth regulator (IGRs) insecticides, and act in the following way: insects are covered with a rigid exoskeleton, the integument, which protects them and prevents water loss, allowing them to survive. In order to develop, and given the rigidity of the aforementioned integument, insects must grow discontinuously. In order to do so, they periodically shed their integument and create a new, larger one, in a process known as "molting". Applying the chitin-synthesis inhibitors used in this formula gives rise to a process capable of inhibiting the mechanism that produces chitin, the main component of the integument. By blocking the production thereof, the formation of a new integument is also blocked, as a consequence of which the "molting" process does not take place, thus making it impossible for the insect to develop and, in turn, to go on living. The activity of the product affects all stages of life of the target insects, though with differences in each case. It affects the eggs of some species when they are laid on the vegetal parts of treated plants, or when the eggs themselves are treated once they are laid. The eggs may develop, but the larvae thereof are either unable to hatch, or die shortly afterwards. It affects larval states by blocking molting, which gives rise to the onset of symptoms such as: double head capsule, bulging thorax and crooked or deformed mandibles. As a consequence of being unable to molt, the larvae die because they cannot develop into later stages. And, because of the aforementioned deformities, they are unable to eat, which makes it impossible for them to survive. The larvae exposed to a sublethal dose of the product may pupate, but will not produce viable adults or else will give rise to adults that lay fewer eggs than normal. It affects adults by reducing the fertility thereof. In terms of juvenile hormone analogs, these are preferably selected from among the group comprised of: pyriproxyfen, fenoxycarb, hydroprene and methoprene.

The plant-derived natural biocides can be selected from the group comprised of: citronella oil, lavandin oil, garlic extract, eucalyptus oils, thyme oils, basil and other plant extracts with biocidal and/or repellent properties, for example: saponin (quinoa), *Allium sativum, Digitalis purpurea, Eucalyptus globosus, Euphorbia helioscopia, Foeniculum vulgare, Laurus nobilis, Rosmarinus officinalis, Rubia peregrina* and *Ruta graveolans.*

The mineral-derived natural biocides are preferably selected from among the group comprised of iron sulphate, copper sulphate, quaternary ammonium salts, sodium carbonate peroxyhydrate and silver chloride.

The polymer binders, which form the polymer wall or structure and surround the active agents, are preferably selected from the following group:
- organic aqueous-based or organic-solvent-based compounds, such as the following:
   - vinyl-acetate-based compounds, whether or not modified with acrylic or methacrylic resins;
   - acrylic-or methacrylic-resin-based compounds, whether or not modified with styrene;
   - compounds based on a dispersion of vinyl chloride, VeoVa resins, achrylonitrile resins, alcylic resins, epoxy resins, styrene-butadiene resins or polyurethane resins;
   - cellulose-derived binders such as cellulose acetate butyrate or nitrocellulose;
   - alkyd and phenolic resins, urea resins, melanine formol, epoxy resins, chlorinated rubber, polyvinyl chloride, acrylic resins, polyurethane resins or natural gums;
   or
- FDA-approved (food use) binders, such as those selected from among the group comprised of:
   - polyvinylpyrrolidone or carbohydrate-based compounds (starches, alginates, carrageenates, pectins, cellulose derivatives, chitosan or gums);
   - animal proteins (casein, whey protein, collagen, egg albumen, fish protein, keratin);
   - plant proteins such as zein and gluten; and
   - lipids (waxes).

The biocidal composition comprises a percentage of fillers of between 0.01 % and 40 % by weight of the total weight. Preferably, said fillers are mineral fillers, and still more preferably they are selected from the group comprised of calcium carbonate, talc, quartz, dolomite, kaolin, silicates, titanium dioxide, sodium hexametaphosphate and/or sodium nitrite.

In a preferred embodiment of the invention, the microencapsulated biocidal composition is a coating comprising:
- at least one organic synthetic biocide selected from the group comprised of:
   - Organophosphorous
   - Carbamates
   - Pyrethroids
   - Neonicotinoids
   - Phenylpyrazoles
   - IGRs
   in a percentage of between 0.1 % and 5 % by weight of the total weight of the composition, both limits included; and
- water, in a percentage of 30 - 70 % by weight of the total weight of the composition;
- coated with a layer of polymer-based binder, comprised within the composition in a percentage of 10 - 30 % by weight of the total weight thereof; and
- at least one filler selected from among the group comprised of:
   - Mineral fillers
   - Hexametaphosphates and nitrites
in a percentage between 10 - 50 %.

In another preferred embodiment, the biocidal composition is a coating comprising:
- at least one organic synthetic biocide selected from among the group comprised of:
   - Organophosphorous
   - Carbamates
   - Pyrethroids
   - Neonicotinoids
   - Phenylpyrazoles
   - IGRs
   in a percentage between 0.1 % and 15 % by weight of the of the total weight of the composition, both limits included; and
- water, in a percentage between 30 - 70 % by weight of the total weight of the composition;
- coated with a layer of polymer-based binder, comprised within the composition in a percentage of 10 - 30 % by weight of the total weight thereof; and
- at least one filler selected from among the group comprised of:
   - Mineral fillers
   - Hexametaphosphates and nitrites
   - Pigments such as titanium dioxide and the like
in a % between 10 - 50 %.

In another preferred embodiment, the biocidal composition is a coating comprising:
- at least one biocide selected from the group comprised of:
   - An organic synthetic biocide, preferably Niclosamide
   - A natural plant-derived biocide, preferably Saponin
   - A mineral-derived natural biocide, preferably copper and iron sulphates
   in a percentage between 1 - 20 % by weight of the total weight of the composition; and
- water, in a percentage between 30 - 70 % by weight of the total weight of the composition;
- coated with a layer of at least one binder selected from the group comprised of:
   - Polymer-based binders
   - FDA-approved (food use) binders
   comprised within the composition in a percentage of 10 - 25 % by weight of the total weight thereof; and
- at least one filler selected from among the group comprised of:
   - Mineral fillers
   - Hexametaphosphates and nitrites
in a percentage between 10 - 50 %.

In another preferred embodiment, the biocidal composition is a transparent coating comprising:
- at least one organic synthetic biocide from the IGR group, in a percentage between 0.01 % and 5 % by weight of the total weight of the composition, both limits included; and
- water, in a percentage between 10 - 70 %;
- coated with a layer of at least one binder selected from the group comprised of:
   - Polymer-based binders
   - FDA-approved (food use) binders
   in a percentage between 5 - 50 %; and
- at least one filler selected from among the Hexametaphosphate and nitrite group in a percentage of between 0.01 % and 4 %, both limits included.

In a preferred embodiment, the composition is a suspension of microcapsules of between one and several hundred micrometers, more specifically between 0.001 and 300 micrometers (from 1 nanometer to 300 microns), both limits included.

Depending on the composition, and especially on the nature and % of the fillers, and depending on the nature of the biocide(s) included, the biocidal composition may be used for different more or less specific purposes, therefore requiring different means of applying the final product. When it is a covering (i.e. a coating), the composition can be selected between: a clear primer, a pigmented paint, an enamel paint, a varnish, or a colorless paint.

In case of having less than 20 % of filler, it can be sprayed onto a variety of surfaces. In this case, after applying the product, it becomes imperceptible once it dries, which is a great advantage when used in domestic settings and on all types of surfaces.

When the % of fillers is greater than 20 %, and the filler is preferably titanium dioxide (pigment), the product acts as a coating that can be applied with a brush, roller or airless spray gun on walls and other rigid surfaces.

### BRIEF DESCRIPTION OF THE DRAWINGS

**FIGURE 1****.** Photographs of the effect of the formulae prepared according to Example 2 on weevils, in the laboratory. Fig. 1 a shows weevils on a piece of painted palm wood, while Fig. 1b shows the weevils dead as a result of the effects of said formula. Fig. 1c shows the lack of any effects on the weevils by an untreated wood, and Fig. 1d shows the weevils dead as a result of the effects of the white insecticidal composition. The same results are shown in Figs. 1e and 1f.

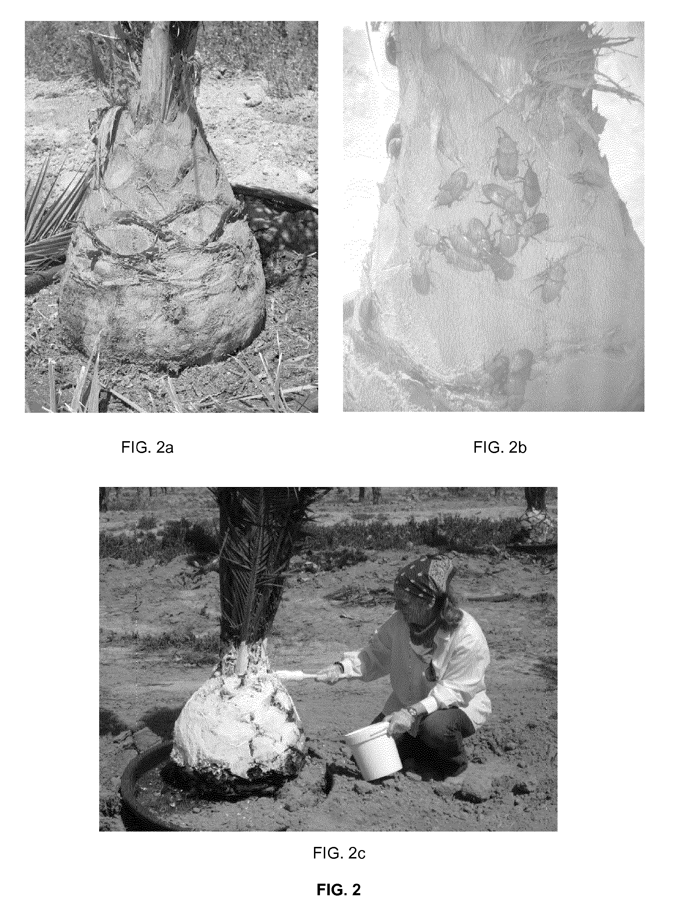

**FIGURE 2****.** Photographs of the field test on palm trees of the insecticidal formulae that affect weevils.

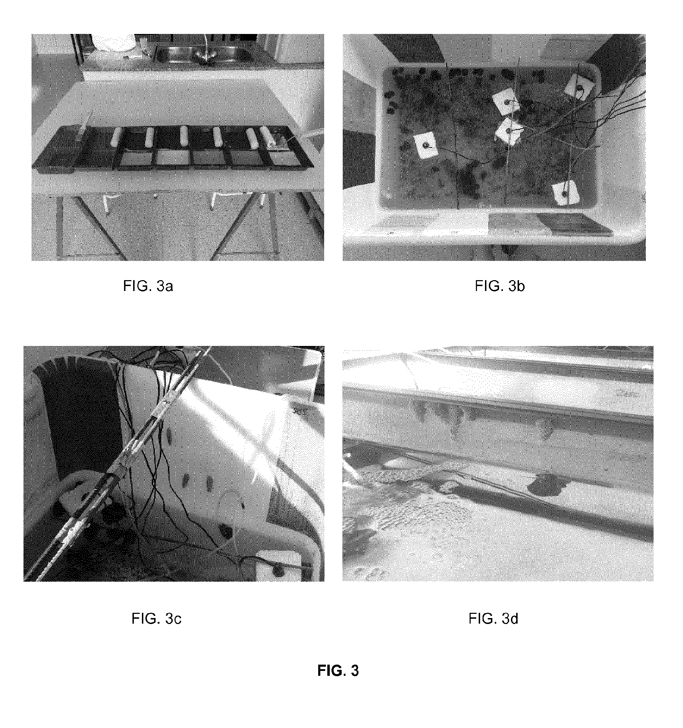

**FIGURE 3****.** Photographs of the laboratory tests of seven formulae against apple snails. Fig. 3a shows the seven formulae being prepared for application.
Fig. 3b. Adhering the side strips to the tray. Fig. 3c. Apple snail eggs on the strip with the control formula (without molluscicide). Fig. 3d. Apple snail eggs on the strip with iron sulphate.

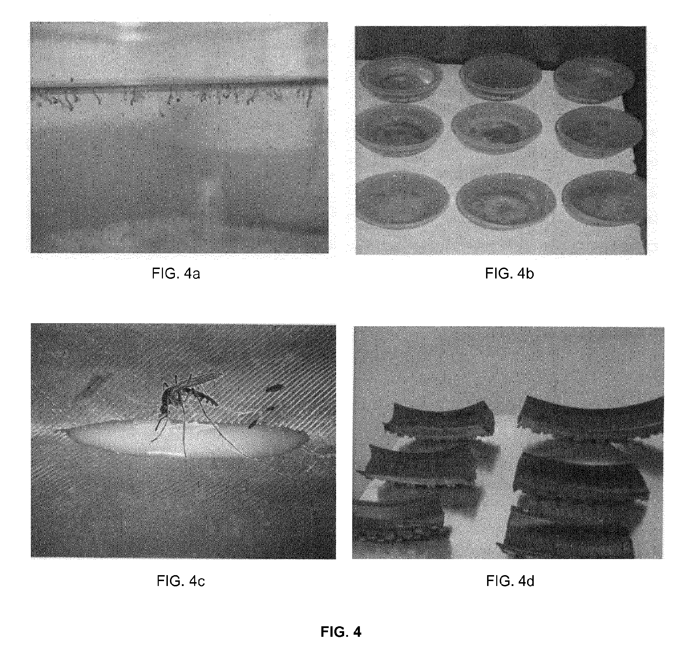

**FIGURE 4****.** Photographs of the laboratory tests with the biocidal formulae with IGR, for controlling *Aedes albopictus.* Fig. 4a. *Ae. albopictus* larvae in a water environment. Fig. 4b. Hatchers where the pupae are placed to be observed as they develop into adults. Fig. 4c. Female *Ae. albopictus* laying eggs on tires treated with INESFLY formula containing IGR. Fig. 4d. Tires with Ae. albopictus eggs.

### EXAMPLES OF THE INVENTION

Below, several examples of the biocidal composition are described, along with the application thereof as a coating and the biocidal effects thereof, as well as how it is prepared and used in textile clothing manufacturing, by way of illustrative and non-limiting example of the invention.

### Example 1: Preparation of the microencapsulated biocidal composition, in the form of a coating.

The formula used to manufacture the composition in coating form is prepared based on a VeoVa vinyl polymer chain, in which the active ingredients (chlorpyrifos) have been microencapsulated in what is called an Insecticidal Polymer Microcapsule (IPM).

### Example 2: Properties of a covering product that incorporates the composition described in Example 1 as an ingredient.

The high persistence of this formula is worth mentioning since the active ingredients are released gradually. As said active ingredients are trapped in the calcium carbonate, and are slowly and gradually released, the amount of insecticides in the surrounding area is very low, considerably decreasing the already low toxicity thereof. Furthermore, the formula does not contain organic solvents, but rather uses water alone as a solvent. This is another key factor in the low toxicity thereof, as it eliminates the toxic effects derived from such solvents. All of this gives it a set of properties that are hard to find in other conventional pesticides, such as immediate effectiveness, prolonged effectiveness, very low toxicity and easy application.

The water and vinyl-polymer based formula enabled the active ingredients to be released gradually over time. This release was found to be directly proportional to room temperature, i.e. the hotter it was, the more insects there were and the more the composition's active ingredients were released, whereas in the cold months far fewer insecticides were released into the surroundings, at a time when the insect population among crops was lower.

### Example 3: Laboratory tests on the use of the composition described in Example 1 against the red palm weevil (Rhynchophorus ferrugineus).

The red palm weevil *(Rhynchophorus ferrugineus*) is the most alarming pest today among palm trees in Spain. Originally from the tropical areas of Southeast Asia and Polynesia, the range of this curculionid in Spain is growing. It has been detected in date palms *(Phoenix dactylifera*) and in the Canary Island date palm *(Phoenix canariensis),* mainly in the male palms of this variety. *Rhynchophorus ferrugineus* lives and feeds inside of palm trees, which makes it difficult to detect the presence thereof by simple visual inspection. The inside of the palm tree protects it and makes it highly adaptable to a variety of geographical areas with different climatic conditions, which influence the developmental periods of the phases of the biological cycle thereof. Because of the biology and the gregarious nature thereof, a single infested palm tree can be the start of a large-scale outbreak, since as many as a thousand or more weevils may develop inside it, with several overlapping generations, and all life cycle stages coexisting within the same palm tree. Severely affected or dead palm trees must be pulled up and burned to keep the adults from exiting and spreading. Although the original climate thereof is tropical, it has successfully settled in desert areas with extreme temperatures, in Mediterranean areas, and in temperate areas such as the Canary Islands. Furthermore, it is worth noting that it has already been detected in the Americas.

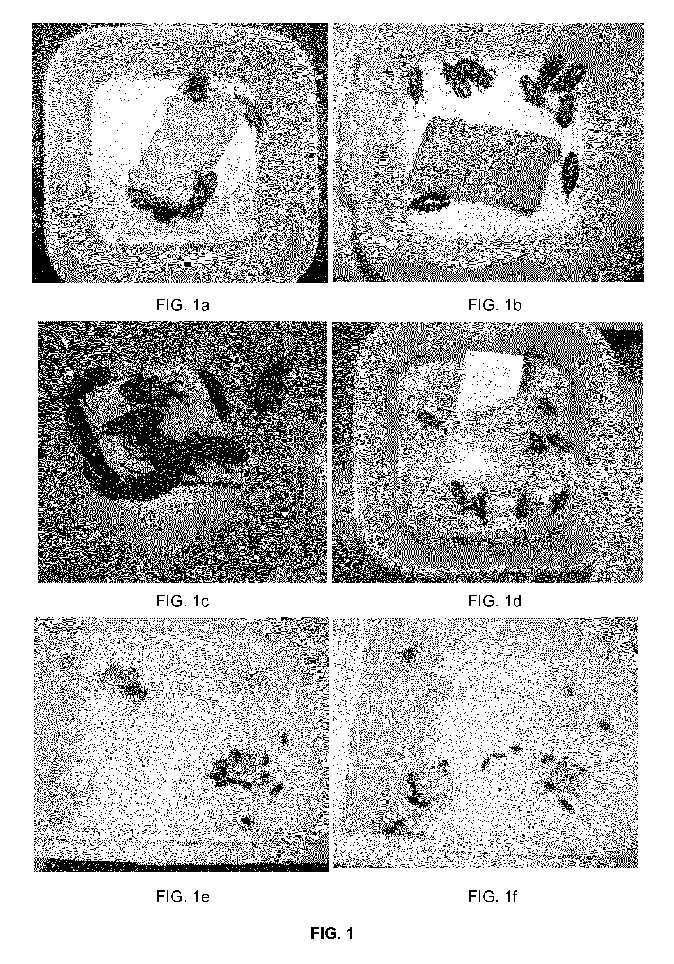

A test was carried out to determine the effectiveness of the white-colored insecticidal composition containing the active agent chlorpyrifos, applied to adult *Rhynchophorus ferrugineus.* To do so, a piece of palm wood was cut, the composition was applied with a brush, the product was left to dry, and ten adult specimens were placed in a closed plastic container with ventilation holes (see Fig. 1).

The adults were found to die after approximately 24 hours. Although this effect was entirely satisfactory, the time span was deemed too long (because in that amount of time the adult could have moved to other untreated areas), and it was proposed that the insecticide be changed to deltamethrin.

The laboratory tests indicated that the adults were affected within two hours, and were found belly up and moving their legs, but otherwise unable to move. Within 24 hours they were all dead. The white control formula, without insecticide, did not have any effect on the pests (see Fig. 1).

### Time spent in contact with the product

In the laboratory, 10 adult specimens were placed in a container with the treated piece of palm wood, then separated after 13 minutes, and placed in another recipient with an untreated piece of palm wood. The same test was repeated, keeping them for 30 minutes and 60 minutes. 60 minutes of contact was enough for the adults to die within 24 hours. Thus, it is reasonable to conclude that the product should be in a place where the adult takes shelter, because there it will spend that amount of time in contact with it. The test carried out has demonstrated more than 6 months of preventative effectiveness, meaning that it can be applied just once a year and protect the palm tree throughout the weevil's active period.

### Example 4: Field tests on the use of a formula derived from that which is described in Example 1, against the red palm weevil (Rhynchophorus ferrugineus).

The formula used based on the insecticidal composition in Example 1 was also prepared by means of a VeoVa vinyl polymer chain, although in this case the microencapsulated active ingredient was deltamethrin instead of chlorpyrifos.

### 4.1 White covering product

Field tests were begun on three plots. The tested products included the white formula with deltamethrin, applied to the crown (the upper part of the stem where the lower or withered fronds are pruned off), of previously pruned palm trees. The plants (Canary Island palm trees) were put in pots or containers. The purpose was to prevent red palm weevil eggs from being laid, or larvae from emerging.

8 Canary Island palm tree plants with an approximately half-meter diameter trunk were arranged. When the palm trees were placed in the testing plot, the bottom of the container was cut, and they were partially buried in the ground. A drip watering system was also installed to maintain them. The elemental plot was comprised of 4 palm trees at least 2 meters apart.

Two groups are compared: palm trees trimmed and treated with the white formula with deltamethrin, versus untreated trimmed palm trees. The two groups are separated by at least 10 meters. The leaves bases were treated with the formula, loaded in a backpack sprayer without a nozzle, and diluted to 40 % in water, and the product was applied to the stem with a brush, diluted to 10 % - 15 % in water.

One pruned palm trees attracted nearby adults. The aim of the formula was to keep the adult females from being able to lay their eggs on the palm tree. Table 1 below shows a summary of the sawdust secretions and the status of the palm trees.

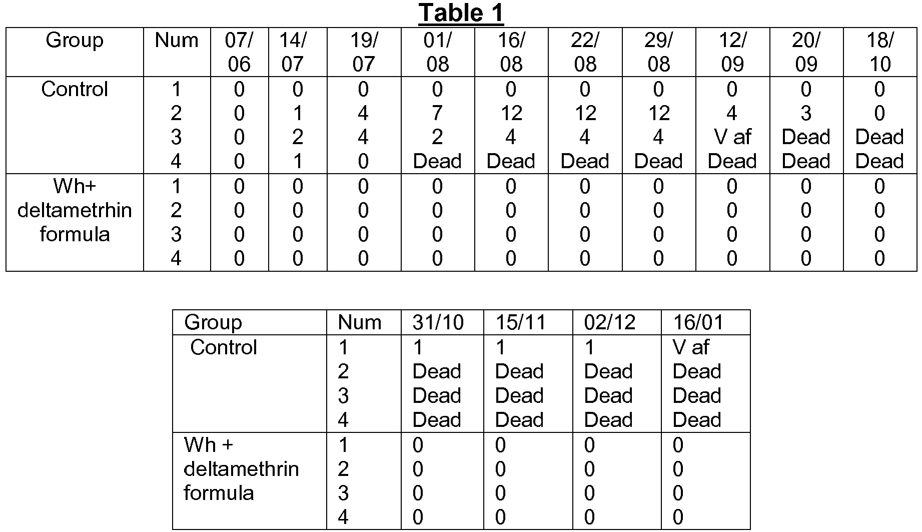

Looking at the dates, indicated in the first row of Table 1, on day 29/08, during a quick visual inspection, 4 final stage larvae were removed from the rotten heart of control palm 4, along with 15 pupae containing recently-formed nymphs and adults, and still more individuals may have remained inside. In September, the second palm tree in the control plot died, and in October, the third. At the beginning of January of the following year, the fourth control palm was very affected. By contrast, the four palm trees treated with the formula containing deltamethrin remained healthy in their plot. The results from the field showed that the formula containing deltamethrin kept the palm trees protected from red palm weevil infestation for 9 months.

### 4.2 Brown formula

Because white stands out too much for this specific application, a brown formula was prepared which maintained the characteristics of the previous formula and blended in with the color of the palm trunk. The procedure, then, was similar to the previous one. First its validity was tested in the laboratory. There, its effectiveness was assessed by placing 10 adults in a recipient with a piece of palm wood that had been treated with this formula. It was found that after two to three hours the adults died similarly to how they died in the case of the white product.

In the field 6 potted and trimmed Canary Island palm trees were used, three of which had been painted with the brown formula in spray form. Each one was covered with an insect screen, inside of which 20 females and 10 males were placed. The screens were then closed shut. 8 days later the dead weevils were counted, and 10 females and 5 males were added to each one, after which the screens were again closed shut.

It was found that in the palm trees treated with the brown formula containing deltamethrin, a mortality of more than two thirds of the introduced adults was observed. After one-and-a-half months, some sawdust secretions were observed. After two months, tunnels were observed in two of the three palm trees of the first control.

One control palm tree died 4 months after the first weevils were introduced. The second, 7 months after the first weevils were introduced. The three palm trees of the second control died 2 months after the first weevils were applied. The palm trees treated with the brown formula remained alive (except one) twelve months after the first adults were applied. And in any case, the one palm tree that died showed no signs of weevils.

In conclusion, the effectiveness of treatment with the brown formula was observed after 12 months.

### Persistence of the effects of the insecticide in the formula

For the laboratory test, after each test, each one of the treated pieces of wood was left out on a balcony in the open air 24 hours a day and exposed to the sun several hours a day. The persistence test was repeated every month. The last test was carried out six months after treating the piece of wood with the white deltamethrin formula. The piece of wood has dried out, but the product has remained. The result was that within two hours after being in contact with the treated piece of wood, the adults had all been affected (belly up and moving their legs). In less than 24 hours they had died. The same thing happened with the piece of palm wood treated with the brown deltamethrin formula four months after treatment.

### Conclusion

The strengthening of the insecticidal effect of the composition stands out spectacularly, particularly in terms of the persistence and uniformity thereof. The tested product, containing deltamethrin, can be effective for protecting pruned palm trees, as a counterbalance to the beacon effect that the tender, newly pruned tissue has on adult red palm weevils.

### Example 5: Field tests on the application in the field of the composition described in Example 1, against aphids in citrus trees and horticulture.

Aphids are small insects that gather together in colonies on leaves and tender shoots. Aphids are typical opportunistic insects that live in temperate zones. The harm they cause to citrus trees stems from feeding by sap absorption, deformations caused by the injection of toxins, transmission of viroses, and the production of honeydew. The most significant species in citrus trees are *Aphis frangulae gossypii, Aphis citricola, Toxoptera aurantii* and *Myzus persicae.*

### Viroses in citrus trees

The most severe virosis in the Mediterranean area is citrus Tristeza. It is a disease caused by a virus affecting orange trees, mandarin trees, and grapefruit grafted to bitter orange trees. It is basically spread by aphid bites. It may kill the tree quickly (collapse within 2 or 3 weeks in the case of the most virulent virus), or cause slow decay (months) with scant yields. This is in the case that the virus is in its most aggressive form.

### Viroses in greenhouse horticulture

The most common viroses in sheltered crops have been known to cause losses of billions of Spanish pesetas, especially in horticulture crops. In tomatoes the tomato spotted wilt virus (TSWV) is one of the most prominent ones, and is transmitted by thrips. These insects apart from scarring the plants by piercing them in order to feed, harm the plant when laying their eggs, since the insect lays under the epidermis of the vegetable.

A control method has been designed to preventively avoid viroses, keeping the vector from piercing the plant -either when probing or feeding-, by means of the use of the biocidal composition obtained in Example 1.

It has been found that placing barriers (fabrics, screens) treated with the product in question, without coming into contact with the vegetable in open-air plantations, has reduced the arrival of aphids, and in turn the number of bites in the plants and, therefore, the risk of contracting the virosis.

### Example 6: Field tests on the application in the field of the formula described in Example 1, against ants in citrus trees.

In citrus plantations, ants can be considered a direct pest, since they eat tender shoots and can cause structural damage-irrigation tubes-and may even bother farmers themselves.

However, the greatest problem with these species is without a doubt that they act as indirect pests, by greatly hampering the natural control of parasites and predators of aphid populations, which receive protection from these hymenoptera "in exchange" for their honeydew. A wide variety of ant species can be found in citrus plantations, of which we will point out *Lasius niger, Lasius grandis, Linepithema humile* and *Tetramorium caespitum.*

The biocidal composition in Example 1 has been shown to be effective at controlling ants in orange trees when applied in a 15 cm band around the trunk, which suffices to keep the ants from climbing up the trunk for 7 months. This means that the formula can be applied just once a year in order to control ants (Annex IV).

### Example 7: Field tests on the application of a formula with a biocidal composition in accordance with the present invention, against the apple snail (Pomacea caniculata).

This snail is native to a large area of South America. It is a voracious herbivore, such that the feeding thereof affects plants and water algae. There is currently not an cost-effective alternative method for treating areas outside of crop fields. The purpose was to obtain a product with molluscicidal effects that was cost-effective, long-lasting over time, and which could keep *Pomacea* females from laying their eggs. The molluscicides were microencapsulated in an active CO₃Ca structure and resin, and then included in a coating that gradually and slowly releases the active substances, making it both more persistent, and at the same time harmless for humans and other species that share the habitat.

The process of applying the molluscicidal formula was similar to the application of any phytosanitary product, with the difference that it is much more persistent, by several months. 7 different formulae were used, in accordance with the present invention:
- SP1. INESFLY POMA SIN: A control formula comprised of a composition with a low percentage of fillers. It is used in the test as a control in order to rule out snail deaths unrelated to the formulae.
- SP2. INESFLY POMA + 5 % Saponin: A formula that contains 5 % saponin as a molluscicide, included by means of a microencapsulation process in a formula with a low percentage of fillers.
- SP3 INESFLY POMA + 5 % Iron sulphate: A formula that contains 5 % iron sulphate as a molluscicide, included by means of a microencapsulation process in a formula with a low percentage of fillers.
- SP4 INESFLY POMA + 0.01 % pyriproxyfen: A formula that contains 0.01 % pyriproxyfen as an active ingredient, included by means of a microencapsulation process in a formula with a low percentage of fillers.
- SP5 INESFLY POMA + 5 % niclosamide : A formula that contains 5 % niclosamide as a molluscicide, included by means of a microencapsulation process in a formula with a low percentage of fillers.
- SP6 INESFLY POMA + 2.5 % saponin + 2.5 % Iron sulphate + 0.01 % pyriproxyfen: A composition that contains a combination of two molluscicides (2.5 % saponin and 2.5 % iron sulphate) and an IGR (0.01 % pyriproxyfen), included by means of a microencapsulation process in a formula with a low percentage of fillers.
- SP7 INESFLY POMA + 2.5 % saponin + 2.5 % Iron sulphate + 2.5 % niclosamide: A composition that contains a combination of three molluscicides (2.5 % saponin, 2.5 % iron sulphate and 2.5 % niclosamide) included by means of a microencapsulation process in a formula with a low percentage of fillers.

All of them contained a lemon-scented aromatic additive.

Different strips painted directly with the compositions were set up. The strips were treated, one by one, and 3 hours were allowed to pass before applying a second coat. The same thing was done with the strips first treated with a bridging product. In order to observe the behavior of the snails in 60 x 40 cm polypropylene trays over 8 days, 4 x 100 cm strips were cut and pasted to the upper part of the tray, covering the entire perimeter. A heat insulating surface was also prepared in order to keep the trays warm.

### Behavior of the biocidal formulae

The behavior of the formulae is quite varied; none of them needs to be diluted, as they are too fluid, and almost all of them give off a strong lemony smell.
- Behavior on strips without primer:
   - SP1: dries well, is too diluted, smells like lemon, is transparent.
   - SP2: DOES NOT dry, is perhaps the most diluted of all, has less lemon smell than SP1, is light brown.
   - SP3: The first coat does not dry well, with subsequent coats it is the one that adheres best, it is also too diluted, it has small films (impurities) on the surface, which streak when applied with the roller, smells like lemon, is a creamy red.
   - SP4: same characteristics as SP1.
   - SP5: does not dry well, is too diluted, smells like lemon, is yellow.
   - SP6: dries well, is too diluted, smells like lemon, is dark brown.
   - SP7: dries well, is too thick, texture similar to thick mucus, smells strange but not unpleasant, very dark brown in color.

Each product behaves differently; the following are the drying times in order from the shortest to the longest:
SP1 = SP4 < SP7 < SP3 < SP6 < SP5 < SP2

The formulae have good flexibility and are not washed away easily. All of these characteristics improve if a primer is applied to the strip.

### Testing methodology

- Select 4 healthy females that are as large as possible for each tray, for a total of 28 females.
- Set up a temperature control system, consisting of a first layer of insulating material such as a thermo-mat, a 160 x 140 cm 120 W electric blanket, and a second layer of insulating material with the same characteristics as the former in order to avoid as much heat loss as possible.
- Paste the strips treated without primer onto the upper part of the sides of the tray.
- Material used:
   ∘ 60 x 40 cm polypropylene trays.
   ∘ Strips of painted self-adhering transparent film, without primer.
   ∘ 160 x 140 cm 120 W electric blanket.
   ∘ 2 70 x 200 cm thermo-mats.

### Method

The treated strips were pasted onto the upper and inner sides of the perimeter of the tray. The trays were placed on the blanket and the blanket in turn on a mat to avoid heat loss. The trays were filled with 8 liters of water, leaving a height of 15 mm between the water and the pasted strips, meanwhile trying to keep the water from touching the product so as to avoid any seeping down into the container. 4 healthy, mid- to large-sized females were placed in the center of the tray in order to observe whether they would move about inside the tray. After several minutes all specimens were either confirmed to have remained active, or else were removed if they had not. Another upside-down tray was placed on top as a lid, and covered with the electric blanket and the other mat on top, whereupon it was left for 24 h with the thermostat at position No. 2. After 24 h, water temperature and the presence of dead animals were recorded, and the relative position of the later inside the tray was noted.

### Results

3 series of experiments were carried out, the first corresponding to an untreated tray with the same temperature conditions, and 1 set of eggs laid after 24 h was observed. The second series corresponded to trays SP2, SP5 and SP6, wherein the following was observed, (day + 1):
- D + 1: no eggs laid in any of the trays, moisture condensation has caused a portion of the product to seep into the water, with the following result:
   o SP2: 4 dead specimens (100%)
   ∘ SP5: they are inactive, with their opercula closed.
   ∘ SP6: same as SP5
- D + 2: SP5 and SP6 are the same as the previous day.
- D + 3: the water of the SP5 is removed, the snails smell very bad and are dead. SP6 seem to resist, and are closed.
- D + 4: SP6 are dead, end of test.

The third series corresponded to trays SP3, SP4 and SP7, wherein the following was observed, (day + 1):
- D + 1: no eggs laid in any of the trays, moisture condensation has caused a portion of the product to seep into the water, with the following result:
   o SP4: the 4 specimens are still active and move about the bottom of the tray, appear to be unaffected.
   ∘ SP3: 2 are active and the other 2 are closed.
   ∘ SP7: 100 % are dead.
- D + 2: SP4 and SP3 are the same as the previous day.
- D + 3: SP4 is the same as the previous day, in SP3 the largest female is floating around dead.
- D + 4: SP4 are active.
- D + 5: end of test, SP4 are still active.

### Conclusions

The snails stayed away from the treated strips, and were observed to touch them with their antennae and quickly withdraw. In the first series one set of eggs was laid, which indicates that they can indeed lay in these trays without difficulty before the product is applied. In the second and third series, the condensation on the surface of the strips caused a small amount of the product to seep into the water, thus polluting it. Upon absorbing the active ingredient contained in the product the snails died, which gives an idea about the toxicity of the samples.

The order of toxicity from the greatest to the least is as follows:
SP2 > SP7 > SP5 > SP6 > SP3 > SP4 = SP1

The snails did not climb up onto the strips, as no trails were visible. They died because the water was polluted, not due to direct contact between the snails and the product. To avoid condensation the lid was removed, which caused a great deal of heat to be lost through evaporation. This made it necessary to find a way for the snail to move across the treated surface in order to determine whether the amount of active matter it absorbed sufficed to prove to be lethal. Due to the repellent effect of the samples, the snails would not move across the treated surface, providing conclusive evidence for the possible molluscicidal effect of the composition.

### Second test

To obtain more information, a further experiment was carried out: treating various pieces of tile with samples SP7, SP2 and SP3. They were left to dry for 48 h. Afterwards a female that was stuck against the wall of the tank under the water was collected and quickly placed on top of the tile before it could close its operculum, whereupon the foot thereof was rubbed vigorously against the surface. 3 series of each test are carried out with the following results:
- SP7: 100 % dead in 24 h
- SP2: 100 % dead in 24 h
- SP3:0%in24h

SP7, that contained niclosamide, proved to be very effective. The same conclusions are true of SP2. SP3 appears to be the least toxic sample, perhaps because of the low concentration thereof.

The lemon scent turned out to be a good repellent, proving to be an eco-friendly repellent that is long-lasting and relatively inexpensive, and that constitutes a valuable biocidal composition when microencapsulated in the compositions object of the present invention.

### Example 8: Field tests on the application of biocidal compositions (emulsions) in accordance with the present invention, against the Asian tiger mosquito (Aedes albopictus).

*Aedes albopictus,* commonly known as the Asian tiger mosquito, left its native Asia to colonize the world. In Europe, it represents a serious problem due to the great ability thereof to adapt to a variety of habitats, both urban and rural, that has helped it to spread quickly.

The effectiveness of three formulae (in emulsion form) was analyxed in accordance with the present invention, containing 0.0063% (Formula 1) 0.063 % (Formula 2) and 0.2 % (Formula 3) of pyriproxyfen, respectively. The bioassays were carried out on *Ae. albopictus* eggs and larvae, where the level of effectiveness thereof against the adult state was determined by means of bioassays recommended by the World Health Organization.

All of the tests were carried out in a climate chamber with controlled temperature, relative humidity and photoperiod. Plastic pots were used, and the composition was measured out at 2 mg / pot. In order to analyze the effectiveness of the tested formulae, mortality and inhibition of adult emergence were assessed. Persistence was analyzed four times: 0, 2, 4 and 6 months after application.
- FIRST EVALUATION (Duration 0 months)
   - Formula 1: Mortality similar to control.
   - Formulae 2 and 3: Higher levels of mortality (23 - 34 %).
   - Slower larva development.
   - 100 % mortality of pupae with all 3 formulae.
- SECOND EVALUATION (Duration 2 months)
   - Low mortality for all three formulae during the first 72 hours.
   - High mortality 20 days on for all three formulae, especially Formula 3 (77 %).
   - 100 % mortality of pupae with all 3 formulae.
- THIRD EVALUATION (Duration 4 months)
   - Low mortality for all three formulae during the first 72 hours.
   - High mortality for formula 3 (69 %) after 27 days of observation.
   - 100 % mortality of pupae with all 3 formulae.
- FOURTH EVALUATION (Duration 6 months)
   - Low mortality for all 3 formulae during the first 48 hours.
   - 33.3 % mortality for formula 2, and 26.7 % for formula 3 after 72 hours.

In conclusion, the effectiveness of IGR is the same in all three formulae, since none of the pupae reach adulthood (100 % efficiency). Formula 3 is more effective at inhibiting growth, since the mortality of L1 - L2 to L3 - L4 is higher with the other two formulae.

Finally, the evolution of the different stages showed that with the tested formulae the cycles of the larvae slowed down with respect to the control group, and larva mortality in the treatments varied between 10% and 70 % with respect to the control, that was between 3 % and 6 %. Nevertheless, the effectiveness could be observed up till pupation, where mortality was 100 % in all 3 formulae, whereas in the control group all adults emerged. The bioassays demonstrated the high level of effectiveness of the formulae, meaning that applying them can help control tiger mosquito populations.

### Example 9: Field tests on the application of formulae with compositions (paints) in accordance with the present invention, against the Asian tiger mosquito (Aedes albopictus).

The effectiveness of three formulae (in paint form) was analyzed in accordance with the present invention, with the following active agents:
- Formula 1: 0.7 % Alpha-cypermethrin, 1 % d-allethrin and 0.063 % Pyriproxyfen
- Formula 2: 1.5 % Dianizon, 1.5 % Chlorpyrifos and 0.063 % Pyriproxyfen
- Formula 3: 3 % Dianizon and 0.063 % Pyriproxyfen

The bioassays were carried out on adult *Ae. albopictus* specimens. The surfaces used were plaster (porous) and wood (non-porous). Dosages of 1 kg / 6 m² and 1 kg / 12 m² were used. As in the previous example, persistence was tested at four times: 0, 2, 4 and 6 months after application.

On the porous surface (plaster), 6 months after application it was observed that the most effective formula in both dosages was the content of Formula 1, both after 30 minutes (in this case, made equal to Formula 2 in the 1 kg / 12 m² dosage) and after 60 minutes. The differences observed between the two dosages were that in the larger dosage there was higher mortality after 30 minutes, though they evened up after 60 minutes. The effectiveness of all 3 formulae still lasts after 6 months.

On the non-porous surface (wood), 6 months after application it was observed that with the dosage of 1 kg / 12 m², the most effective formula was Formula 2. Effectiveness after 6 months was 100 % for Formula 2 and for Formula 3, but not for Formula 1.

With the dosage of 1 kg / 6 m², very positive results were observed for Formula 2 and for Formula 1 (100% after 30 minutes). The effectiveness of all three formulae still held 6 months on.

## Claims

1. A biocidal composition for controlling invasive species in natural ecosystems and those altered by humans, which acts as an insecticide, acaricide, molluscicide, algicide, fungicide, arthropod repellent, chitin synthesis inhibitor and/or insect juvenile hormone regulator, comprising:
- at least one biocide selected from the group comprised of organic synthetic biocide, inorganic synthetic biocide, plant-derived natural biocide, and mineral-derived natural biocide, in a percentage between 0.1 % and 75 % by weight of the total weight of the composition, both limits included; and
- water in a percentage between 10 % and 70 % by weight of the total weight of the composition, both limits included;
- coated with at least one polymer- and/or mineral-based binder, which surrounds them in microcapsule form, wherein said polymer is comprised in the composition in a percentage between 1 % and 50 % by weight of the total weight of the composition; and
- fillers in a percentage between 0.01 % and 40 % by weight of the total weight of the composition.

2. The biocidal composition described in the previous claim, wherein the invasive species are selected from the group comprised of: nematodes, mollusks, insects, arachnids, crustaceans, algae and birds.

3. The biocidal composition described in any one of the previous claims, wherein the organic or inorganic synthetic biocides are selected from the group comprised of: organophosphorous, carbamates, pyrethroids, neonicotinoids, phenylpyrazoles, chitin-synthesis inhibitors, insect juvenile hormone analogs, molluscicidal biocides, nematicidal biocides, and any combination thereof.

4. The biocidal composition described in the previous claim, wherein the organophosphorous are selected from the group comprised of: Dianizon, cholpyrifos, methylchlorpyrifos, malathion, trichlorfon, dimethoate, dichlorvos, methamidophos, acephate, parathion, fenitrothion, fenthion, azinphos methyl.

5. The biocidal composition described in claim 3, wherein the carbamates are selected from the group comprised of methomyl, aldicarb, oxamyl, thiodicarb, methiocarb, propoxur, bendiocarb, carbosulfan, fenoxycarb, pirimicarb, indoxacarb, alanycarb and furathiocarb.

6. The biocidal composition described in claim 3, wherein the pyrethroids are selected from the group comprised of: Allethrin, d-allethrin, alphacypermethrin, cypermethrin, permethrin, tetramethrin, bioallethrin, fenvalerate, bifenthrin, cyfluthrin, deltamethrin, prallethrin, acenathrin, imiprothrin, lambda-cyhalothrin, gamma-cyhalothrin and etofenprox.

7. The biocidal composition described in claim 3, wherein the neonicotinoids are selected from the group comprised of: imidacloprid, acetamiprid, thiamethoxam, nitenpyram, clothianidin, dinotefuran and thiacloprid.

8. The biocidal composition described in claim 3, wherein the phenylpyrazoles are selected between fipronil and endosulfan.

9. The biocidal composition described in claim 3, wherein the chitin-synthesis inhibitors are selected from the group comprised of: flufenoxuron, hexythiazox, diflubenzuron, hexaflumuron and triflumuron.

10. The biocidal composition described in claim 3, wherein the juvenile hormone analogs are selected from the group comprised of: pyriproxyfen, fenoxycarb, hydroprene and methoprene.

11. The biocidal composition described in claim 3, wherein the molluscicidal biocides are selected from the group comprised of: niclosamide, phentylhydroxide and metaldehyde; and the nematicidal biocides are selected from the group comprised of: Fenamiphos, Oxamyl, Carbofuran, Terbuphos, Etoprophos and Cadusafos.

12. The biocidal composition described in any one of the previous claims, wherein the plant-derived natural biocides are selected from the group comprised of: citronella oil, lavandin oil, garlic extract, eucalyptus oils, thyme oils, basil, Saponin, *Allium sativum, Digitalis purpurea, Eucalyptus globosus, Euphorbia helioscopia, Foeniculum vulgare, Laurus nobilis, Rosmarinus officinalis, Rubia peregrina* and *Ruta graveolans.*

13. The biocidal composition described in any one of the previous claims, wherein the mineral-derived natural biocides are selected from the group comprised of iron sulphate, copper sulphate, quaternary ammonium salts, sodium carbonate peroxyhydrate and silver chloride.

14. The biocidal composition described in any one of the previous claims, wherein the at least one polymer binder, which forms the polymer wall or structure and surrounds the active agents, is preferably selected from the group comprised of:
- water-based or organic-solvent-based binders, selected from the group comprised of:
- vinyl-acetate-based compounds, whether or not modified with acrylic or methacrylic resins;
- acrylic- or methacrylic-resin-based compounds, whether or not modified with styrene;
- compounds based on a dispersion of vinyl chloride, VeoVa resins, achrylonitrile resins, alcylic resins, epoxy resins, styrene-butadiene resins or polyurethane resins;
- cellulose-derived binders such as cellulose acetate butyrate or nitrocellulose; and
- alkyd and phenolic resins, urea resins, melanine formol, epoxy resins, chlorinated rubber, polyvinyl chloride, acrylic resins, polyurethane resins or natural gums;
and
- food-use binders, selected from the group comprised of:
- polyvinylpyrrolidone or carbohydrate-based compounds;
- animal proteins;
- plant proteins such as zein and gluten; and
- lipids.

15. The biocidal composition described in any one of the previous claims, wherein the fillers are mineral fillers, selected from the group comprised of calcium carbonate, talc, quartz, dolomite, kaolin, silicates, titanium dioxide, sodium hexametaphosphate, sodium nitrite and any combination thereof.

16. The biocidal composition described in claim 1, which is a coating and has the following formula:
- at least one organic synthetic biocide selected from the group comprised of: Organophosphorous, Carbamates, Pyrethroids, Neonicotinoids, Phenylpyrazoles, IGRs and any combination thereof; in a percentage between 0.1 % and 5 % by weight of the total weight of the composition, both limits included; and
- water, in a percentage between 30 - 70 % by weight of the total weight of the composition;
- coated with a layer of polymer-based binder, comprised within the composition in a percentage between 10 - 30 % by weight of the total weight thereof; and
- at least one filler selected from the group comprised of mineral fillers, hexametaphosphates and nitrites, in a percentage between 10 - 50 %.

17. The biocidal composition described in claim 1, which is a coating and has the following formula:
- at least one organic synthetic biocide selected from the group comprised of: Organophosphorous, Carbamates, Pyrethroids, Neonicotinoids, Phenylpyrazoles and IGRs; in a percentage between 0.1 % and 15 % by weight of the total weight of the composition, both limits included; and
- water, in a percentage between 30 - 70 % by weight of the total weight of the composition;
- coated with a layer of polymer-based binder, comprised within the composition in a percentage between 10 - 30 % by weight of the total weight thereof; and
- at least one filler selected from the group comprised of: mineral fillers, hexametaphosphates and nitrites, titanium dioxide and other pigments, in a percentage between 10 - 50 %.

18. The biocidal composition described in claim 1, which is a coating and has the following formula:
- at least one biocide selected from the group comprised of: organic synthetic biocide, plant-derived natural biocide and mineral-derived natural biocide, in a percentage between 1 - 20 % by weight of the total weight of the composition; and
- water, in a percentage between 30 - 70 % by weight of the total weight of the composition;
- coated with a layer of at least one binder selected from the group comprised of: polymer-based binders and food-use binders, comprised within the composition in a percentage between 10 - 25 % by weight of the total weight thereof; and
- at least one filler selected from the group comprised of: mineral fillers and hexametaphosphates and nitrites, in a percentage of 10 - 50 %.

19. The biocidal composition described in claim 1, which is a transparent coating and has the following formula:
- at least one organic synthetic biocide from the IGR group, in a percentage between 0.01 % and 5 % by weight of the total weight of the composition, both limits included; and
- water, in a percentage between 10 - 70 %;
- coated with a layer of at least one binder selected from the group comprised of: polymer-based binders and food-use binders, in a percentage between 5 - 50 %; and
- at least one filler selected from the hexametaphosphate and nitrite group in a percentage of between 0.01 % and 4 %, both limits included.

20. A coating product, which is the biocidal composition described in any one of claims 1 to 19.

21. The coating product described in the previous claim, which is selected from the group comprised of: a transparent primer, a pigmented paint, an enamel paint, a varnish, and a colorless paint.

22. Use of the biocidal composition described in any one of claims 1 to 19, as a coating product.
